**Europäisches Patentamt**

**European Patent Office**

**Office européen des brevets**

(19)

(11) Veröffentlichungsnummer: **0 234 192**
**B1**

(12)
# EUROPÄISCHE PATENTSCHRIFT

(45) Veröffentlichungstag der Patentschrift:
**29.08.90**

(21) Anmeldenummer: **87100134.3**

(22) Anmeldetag: **08.01.87**

(51) Int. Cl.⁵: **B29C 63/04,** A47B 77/02,
A47B 96/18
// B29L9:00, B29L31:44

(54) Verfahren zur Herstellung einer Verbundplatte.

(30) Priorität: **30.01.86 DE 3602729**

(43) Veröffentlichungstag der Anmeldung:
**02.09.87 Patentblatt 87/36**

(45) Bekanntmachung des Hinweises auf die Patenterteilung:
**29.08.90 Patentblatt 90/35**

(84) Benannte Vertragsstaaten:
**AT BE CH DE ES FR GB GR IT LI LU NL SE**

(56) Entgegenhaltungen:
**BE-A- 660 497**
**DE-A- 3 131 820**
**DE-A- 3 140 770**
**DE-A- 3 308 947**
**DE-B- 1 779 692**
**DE-U- 8 515 453**

(73) Patentinhaber: **DUROPAL-Werk Eberh. Wrede GmbH &**
**Co. KG, Industriegelände Bruchhausen,**
**D-5760 Arnsberg 1(DE)**

(72) Erfinder: **Weber, Jürgen, Am Brautmorgen 32,**
**D-4763 Ense-Niederense(DE)**

(74) Vertreter: **von Rohr, Hans Wilhelm, Dipl.-Phys. et al,**
**Patentanwälte Gesthuysen & von Rohr**
**Huyssenallee 15 Postfach 10 13 33, D-4300 Essen 1(DE)**

**Beschreibung**

Die Erfindung betrifft ein Verfahren zur Herstellung einer Verbundplatte, die eine Kernplatte, eine auf der Oberseite der Kernplatte aufgeleimte Deckplatte, vorzugsweise eine Hochdruck-Schichtstoffplatte (HPL-Platte, DIN 16926), einen auf den Rand der Kernplatte aufgeleimten Randstreifen und eine auf der Unterseite der Kernplatte aufgeleimte Schutzfolie od. dgl. aufweist und bei der, vorzugsweise, die Kernplatte am Rand abgerundet und die Deckplatte zur Bildung des Randstreifens von der Oberseite um den abgerundeten Rand der Kernplatte, insbesondere bis auf die Unterseite der Kernplatte, herumgezogen ist. Bei der Kernplatte handelt es sich dabei meist um eine Holzspannplatte, Holzpreßplatte od. dgl., aber auch um Naturholzplatten oder Platten beispielsweise aus Kunststoff. Auf die Oberseite einer Kernplatte ist regelmäßig eine Deckplatte aufgeleimt. Wesentlich ist, daß die Deckplatte wasser- oder hitzebeständig ist. Auf der Unterseite der Kernplatte ist meist eine Schutzfolie, Deckplatte od. dgl. aufgeleimt, die dem Schutz der Kernplatte gegen Feuchtigkeit und/oder Hitzeeinwirkung dient.

Die bekannte, zuvor erläuterte Verbundplatte (DE-A 3 308 947), zeichnet sich also dadurch aus, daß auf der Unterseite der Kernplatte in einem bestimmten Abstand vom Rand eine im wesentlichen parallel zum Rand verlaufende Abtropfnut vorgesehen ist, an der ein Abtropfen von um den Rand herumlaufenden Wassertropfen erzwungen werden soll. Die Abtropfnut ist in einer Profilleiste aus einem thermoplastischen, nässeabweisenden Kunststoff ausgebildet. Die Profilleiste selbst ist in eine rechteckige Nut in der Kernplatte eingeleimt. Die Unterkante der Profilleiste ist randseitig einerseits mit der um den Rand der Kernplatte herumgezogenen Deckplatte, andererseits mit der auf der Unterseite aufgeleimten Schutzfolie verleimt. Durch die direkte Verleimung der Deckplatte bzw. Schutzfolie mit der Profilleiste aus thermoplastischem Material wird eine für Feuchtigkeitseintritt anfällige Leimfuge Deckplatte bzw. Schutzfolie/Kernplatte vermieden, jedoch ist die entstehende Leimfuge, wie Versuche gezeigt haben, erheblichen Wasserdampfbelastungen nicht mit absoluter Sicherheit langfristig gewachsen. Das liegt daran, daß zum Verleimen großflächig verarbeitbare Kleber verwendet werden, beispielsweise Kleber auf der Basis von Harnstoffharz, die an dieser Stelle bei sehr intensiven Wasserdampfeinflüssen durchlässig werden.

Die Profilleiste aus thermoplastischem, nässeabweisendem Kunststoff muß bei der bekannten Verbundplatte nicht vorgefertigt sein, sie kann auch an der Kernplatte selbst hergestellt werden. Dabei füllt man zunächst spritzfähigen Kunststoff, beispielsweise Polyurethan, einen Heißschmelzkleber od. dgl., in die Nut in der Kernplatte ein, läßt dann den Kunststoff zu einer kompakten Füllung aushärten und leimt anschließend die Deckplatte/Schutzfolie flächig, also auch auf die Füllung in der Nut , auf. Im Anschluß daran wird die Abtropfnut in der Füllung ausgebildet, nämlich dadurch, daß entsprechende Bereiche der Deckplatte bzw. der Schutzfolie und der Füllung weggefräst werden. Bei diesem Herstellungsverfahren liegt also die Füllung aus spritzfähigem Kunststoff schon fertig ausgehärtet, abgekühlt vor, wenn die Deckplatte bzw. die Schutzfolie mit Hilfe von Harstoffharzkleber od. dgl. aufgeleimt werden. Die Verbindung zwischen der Deckplatte bzw. der Schutzfolie und der Füllung und die Qualität dieser Verbindung hängt also von den Eigenschaften des Harnstoffharzklebers od. dgl. ab.

Ausgehend von dem zuvor erläuterten Stand der Technik liegt der Erfindung nun die Aufgabe zugrunde, ein Verfahren anzugeben, mit dem bei einer Verbundplatte der in Rede stehenden Art die Füllung aus spritzfähigem Kunststoff, in der die Abtropfnut ausgebildet werden soll, mit der Deckplatte bzw. der Schutzfolie optimal feuchtigkeitsdicht verbunden werden kann.

In einer ersten Alternative ist das erfindungsgemäße Verfahren durch die Merkmale des Anspruchs 1 gekennzeichnet. Für diese Alternative ist vorausgesetzt, daß die Ränder der Deckplatte bzw. der Schutzfolie von vornherein schon ein wenig in die auf der Unterseite der Kernplatte ausgebildete Nut vorragen. Anders als bei der bekannten Verbundplatte ist aber zu diesem Zeitpunkt die Nut in der Kernplatte noch leer. Erst nach fertig aufgeleimter Deckplatte bzw. Schutzfolie od. dgl. wird die Nut in der Kernplatte mit dem spritzfähigen Kunststoff gefüllt. Dabei werden die in die Nut vorragenden Ränder der Deckplatte und der Schutzfolie mit dem spritzfähigen Kunststoff hinterfüllt. Der aufgetragene Leim auf der Innenseite der Deckplatte bzw. der Schutzfolie kann ohne weiteres so eingestellt werden, daß er zum Zeitpunkt der Durchführung dieses Verfahrensschritts noch weich und reaktionsfähig ist. Mit diesem Leim kann der noch flüssige Kunststoff der Füllung an den Innenseiten der Deckplatte bzw. der Schutzfolie eine innige Verbindung eingehen. Beim Aushärten des spritzfähigen Kunststoffs ergibt sich so die innige und optimal feuchtigkeitsdichte Verbindung zwischen Füllung einerseits und Deckplatte bzw. Schutzfolie andererseits.

In einer zweiten Alternative ist das erfindungsgemäße Verfahren durch die Merkmale des Anspruchs 2 gekennzeichnet. Hierbei werden die Deckplatte und die Schutzfolie nicht von vornherein so aufgeleimt, daß sie mit ihren Rändern ein wenig in die Nut vorragen, sondern die Nut wird zunächst durch die aufgeleimte Deckplatte bzw. die aufgeleimte Schutzfolie vollständig überdeckt. Der Zutrittsspalt zur Nut wird dann in einem weiteren Verfahrensschritt geöffnet und danach laufen die weiteren Verfahrensschritte in der schon zuvor zur ersten Alternative erläuterten Reihenfolge ab.

Die durch Anlage des noch flüssigen Kunststoffs an den Innenseiten der Deckplatte bzw. der Schutzfolie od. dgl. erreichte feuchtigkeitsdichte Verbindung zwischen Füllung einerseits und Deckplatte bzw. Schutzfolie andererseits ist in besonderem Maße wasserdampffest bei Verwendung von Polyurethan als spritzfähiger Kunststoff. Ähnliches dürfte aber auch für Heißschmelzkleber und andere ähnliche spritzfähige Kunststoffe gelten.

Erfindungsgemäß wird also bei der Einbringung des spritzfähigen Kunststoffs der Füllung in die Nut gleichsam umgekehrt wie im Stand der Technik gearbeitet, erfolgt also nicht ein Aufleimen der Deckplatte bzw. Schutzfolie auf die ausgehärtete Füllung in der Nut, sondern ein Hinterfüllen von Deckplatte bzw. Schutzfolie mit dem flüssigen Kunststoff der Füllung und dadurch die gewünschte Verbindung der Füllung mit Deckplatte bzw. Schutzfolie od. dgl.. Am fertigen Produkt, also an der Verbundplatte erkennt man die erfindungsgemäße Verfahrensweise daran, daß der die Füllung bildende spritzfähige Kunststoff unmittelbar, also ohne einer zwischenliegende Klebeschicht, oder unter Bildung eines integralen Stoffverbundes mit einer auf den Innenseiten der Deckplatte bzw. der Schutzfolie od. dgl. befindliche Klebeschicht mit der Deckplatte bzw. der Schutzfolie od. dgl. verbunden ist. Eine erfindungsgemäße Verbundplatte erkennt man also ohne weiteres daran, daß im Vertikalschnitt zwischen der Füllung einerseits und der Deckplatte bzw. der Schutzfolie od. dgl. andererseits praktisch keine zwischenliegenden Klebeschichten zu erkennen sind.

Weitere zweckmäßige Ausgestaltungen des erfindungemäßen Herstellungsverfahrens ergeben sich aus den nachfolgenden Verfahrensansprüchen, wobei den Merkmalen des Anspruchs 7 über den vorliegend gegebenen Zusammenhang hinaus eine eigenständige, unabhängige erfinderische Bedeutung zukommt.

Nachfolgend wird die Erfindung anhand einer lediglich Ausführungsbeispiele darstellenden Zeichnung näher erläutert; es zeigt

Fig. 1 in perspektivischer Ansicht ein bevorzugtes Ausführungsbeispiel einer erfindungsgemäßen Verbundplatte,

Fig. 2, 3 und 4 im Schnitt eine erfindungsgemäße Verbundplatte mit der Unterseite nach oben weisend in verschiedenen Verfahrensschritten eines erfindungsgemäßen Verfahrens,

Fig. 5 und 6 ausschnittweise, in vergrößerter Darstellung, die Verbundplatte gemäß Fig. 2 in weiteren Verfahrensschritten und

Fig. 7 und 8 in den Fig. 5 und 6 entsprechenden Darstellungen Verfahrensschritte eines etwas abgewandelten erfindungsgemäßen Verfahrens.

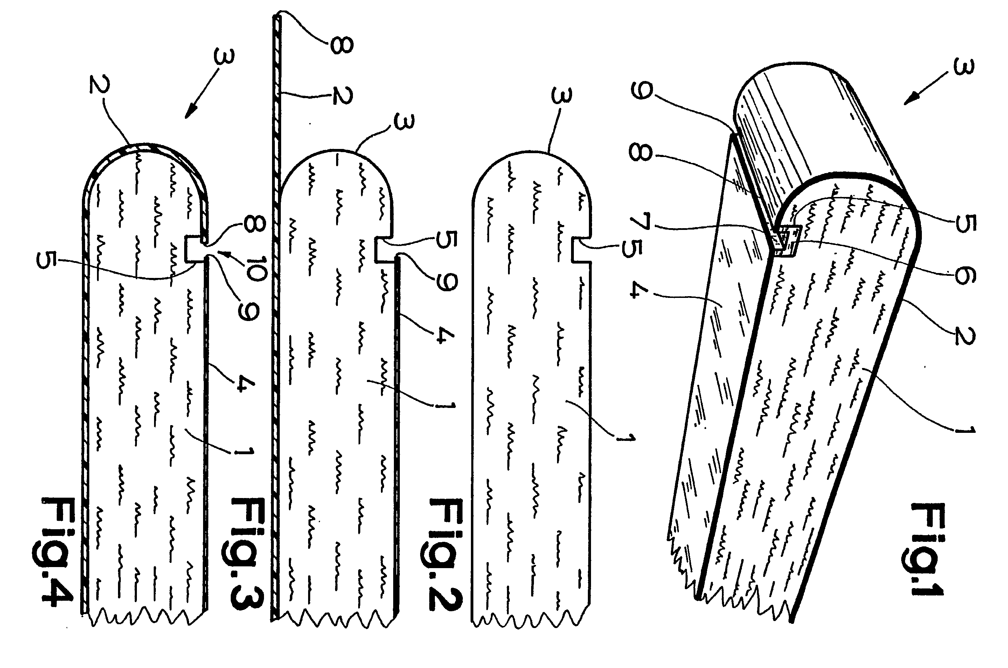

Die in Fig. 1 in perspektivischer Ansicht in Einbaulage dargestellte Verbundplatte weist zunächst eine Kernplatte 1, im dargestellten Ausführungsbeispiel eine Holzspanplatte, eine auf der Oberseite der Kernplatte 1 aufgeleimte Deckplatte 2, im dargestellten bevorzugten Ausführungsbeispiel eine Hochdruck-Schichtstoffplatte (HPL-Platte, DIN 16926), einen auf den Rand 3 der Kernplatte 1 aufgeleimten, nicht mit einem gesonderten Bezugszeichen versehenen Randstreifen und eine auf der Unterseite der Kernplatte 1 aufgeleimte Schutzfolie 4 od. dgl., im hier dargestellten Ausführungsbeispiel ebenfalls in Form einer Hochdruck-Schichtstoffplatte, auf. Zu diesen grundsätzlichen Teilen der dargestellten Verbundplatte ist eingangs der Beschreibung einiges erläutert worden, worauf verwiesen werden darf.

Das in Fig. 1 dargestellte Ausführungsbeispiel einer Verbundplatte ist insoweit besonders, als die Kernplatte 1 hier am Rand 3 abgerundet ist und die Deckplatte 2 zur Bildung des Randstreifens von der Oberseite um den abgerundeten Rand 3 der Kernplatte 1 bis auf die Unterseite der Kernplatte 1 herumgezogen ist. Auch auf der Unterseite der Kernplatte 1 ist diese im Bereich der Unterkante abgerundet. Auf der Unterseite der Kernplatte 1 ist in einem bestimmten Abstand vom Rand 3 eine im wesentlichen parallel zum Rand 3 verlaufende Nut 5 ausgebildet. Der Abstand der Nut 5 vom Rand 3 der Kernplatte 1 liegt im dargestellten Ausführungsbeispiel bei etwa 40 mm, ganz generell ist dieser Abstand zwischen 10 mm und 50 mm üblich. Die Deckplatte 2 und im hier dargestellten Ausführungsbeispiel auch die Schutzfolie 4 haben tatsächlich häufig eine Dicke zwischen 0,5 mm und 1,2 mm, vorzugsweise von 0,8 mm, besonders häufig wird aber anstelle einer Hochdruck-Schichtstoffplatte eine dünne Kunstharzfolie als Schutzfolie 4 od. dgl. verwendet, deren Dicke zwischen 0,1 und 0,2 mm liegt.

Fig. 1 läßt gut erkennen, daß in der Nut 5 der Kernplatte 1 eine Füllung 6 aus einem spritzfähigen Kunststoff vorgesehen und in der Füllung 6 eine parallel zur Nut 5 verlaufende Abtropfnut 7 ausgebildet ist. Deutlich erkennbar ist dabei ferner, daß die Deckplatte 2 bzw. die Schutzfolie 4 od. dgl. mit ihren Rändern 8, 9 ein wenig in die Nut 5 vorragen, also die Füllung 6 von den Seiten her überfassen. Die Füllung 6 ist dabei randseitig, und zwar auch von den Innenseiten her, mit der Deckplatte 2 bzw. der Schutzfolie 4 od. dgl. feuchtigkeitsgeschützt verbunden. Die Länge der Leimfugen, die hier im wesentlichen in der Ebene der Unterseite der Kernplatte 1 liegen, wird durch den Überstand der Deckplatte 2 bzw. der Schutzfolie 4 od. dgl. bestimmt.

Wesentlich für die in Fig. 1 dargestellte erfindungsgemäße Verbundplatte ist nun, daß der die Füllung 6 bildende spritzfähige Kunststoff, beispielsweise Polyurethan aber auch ein Heißschmelzkleber, unmittelbar, also ohne eine zwischenliegende Klebeschicht, oder unter Bildung eines integralen Stoffverbundes mit einer auf den Innenseiten der Deckplatte 2 bzw. der Schutzfolie 4 od. dgl. befindlichen Klebeschicht mit der Deckplatte 2 bzw. der Schutzfolie 4 od. dgl. verbunden ist. Der spritzfähige Kunststoff der Füllung 6 selbst ergibt also, ggf. in Stoffverbund mit einer Klebeschicht, eine innige und optimal feuchtigkeitsdichte Verbindung mit der Deckplatte 2 bzw. der Schutzfolie 4 od. dgl.

Im in Fig. 1 dargestellten bevorzugten Ausführungsbeispiel ist die Breite der Abtropfnut 7 genauso groß wie der lichte Abstand der Ränder 8, 9 der Deckplatte 2 bzw. der Schutzfolie 4 od. dgl. voneinander. Will man die Ränder 8, 9 der Deckplatte 2 der Schutzfolie 4 od. dgl. schonen, insbesondere um ein Einreißen oder Brechen der extrem dünnen Schutzfolie 4 od. dgl. zu vermeiden, so sollte zweckmäßigerweise die Breite der Abtropfnut 7 geringer sein als der lichte Abstand der Ränder 8, 9 voneinander.

Die Unterseiten der um den Rand 3 der Kernplatte 1 herumgezogenen Deckplatte 2 einerseits und der Schutzfolie 4 od. dgl. andererseits fluchten im in Fig. 1 dargestellten Ausführungsbeispiel ohne weiteres miteinander, da in beiden Fällen im dargestellten Ausführungsbeispiel Hochdruck-Schichtstoffplatten verwendet worden sind. Ist die Dicke der Deckplatte 2 jedoch größer als die Dicke der Schutzfolie 4 od. dgl., was eher der Normalfall ist, so empfiehlt es sich, daß die dem Rand 3 zugewandte Kante der Nut 5 um die Differenz der Dicken von Deckplatte 2 und Schutzfolie 4 od. dgl. näher zur Oberseite der Kernplatte 1 liegt als die vom Rand 3 abgewandte Kante der Nur 5. Damit fluchten auch in diesem Fall die Unterseiten der Deckplatte 2 und der Schutzfolie 4 od. dgl. miteinander.

Die Fig. 2 bis 6 zeigen nun verschiedene Schritte eines Verfahrens zur Herstellung einer Verbundplatte, wobei die Verbundplatte eine Kernplatte 1, eine auf der Oberseite der Kernplatte 1 aufgeleimte Deckplatte 2, einen auf den Rand der Kernplatte 1 aufgeleimten Randstreifen und eine auf der Unterseite der Kernplatte 1 aufgeleimte Schutzfolie 4 od. dgl. aufweist und vorzugsweise und im dargestellten Ausführungsbeispiel die Kernplatte 1 am Rand 3 abgerundet ist und die Deckplatte 2 zur Bildung des Randstreifens von der Oberseite um den abgerundeten Rand 3 der Kernplatte 1 bis auf die Unterseite der Kernplatte 1 herumgezogen ist. Bei diesem Verfahren wird im in Fig. 2 gerade abgeschlossenen Verfahrensschritt auf der Unterseite der Kernplatte 1 in einem bestimmten Abstand vom Rand 3 eine im wesentlichen parallel zum Rand 3 verlaufende Nut 5 ausgebildet. Dies geschieht nach bevorzugter und insoweit in Fig. 3 dargestellter Lehre gleichzeitig mit dem Verfahrensschritt des Abrundens der Kernplatte 1 am Rand. Danach werden die Deckplatte 2 und die Schutzfolie 4 od. dgl. auf die Kernplatte 1 aufgeleimt. Die Situation nach diesem Verfahrensschritt zeigt Fig. 3, wobei beachtenswert ist, daß hier die Deckplatte 2 nur flächig auf die Oberseite der Kernplatte 1 aufgeleimt ist, aber noch nicht um den Rand 3 der Kernplatte 1 herumgezogen worden ist. Fig. 3 zeigt insoweit ein besonders bevorzugtes Ausführungsbeispiel des erfindungsgemäßen Verfahrens, als hier zur Berücksichtigung einer unterschiedlichen Dicke der Deckplatte 2 und der Schutzfolie 4 od. dgl. die Kernplatte 1 in einem auf das Abrunden des Randes 3 folgenden Verfahrensschritt durch Abtragen von der Unterseite aus zwischen dem Rand 3 und der dem Rand 3 zugewandten Kante der Nut 5 auf eine Dicke gebracht worden ist, die um die Differenz der Dicken von Deckplatte 2 und Schutzfolie 4 od. dgl. geringer ist als die Dicke der Kernplatte 1 im übrigen. Dadurch werden später fluchtende Unterseiten der Deckplatte 2 und der Schutzfolie 4 od. dgl. ungeachtet der unterschiedlichen Dicke erreicht. Der Dickenausgleich erfolgt in besonders zweckmäßiger Weise im Bereich der Nut 5.

Im zuvor erläuterten Zusammenhang ist Fig. 3 noch insoweit bemerkenswert, als vor dem hier dargestellten Verfahrensschritt die Schutzfolie 4 od. dgl. auf die Unterseite der Kernplatte 1, die hier oben angeordnet ist, vollflächig aufgeleimt worden ist. Gleichzeitig mit dem Abtragen der Kernplatte 1 von der Unterseite aus ist im Bereich zwischen dem Rand 3 und der Nut 5 auch die Schutzfolie 4 od. dgl. abgetragen worden, bis auf den kleinen in die Nut 5 vorragenden, in Fig. 3 erkennbaren Überstand.

Im in Fig. 4 abgeschlossenen Verfahrensschritt wird die Deckplatte 2 um den Rand 3 der Kernplatte 1 herumgezogen. Der in Fig. 3 erkennbare Überstand der Deckplatte 2 ist so bemessen, daß der Rand 8 der Deckplatte 2 gerade ein wenig in die Nut 5 vorragt.

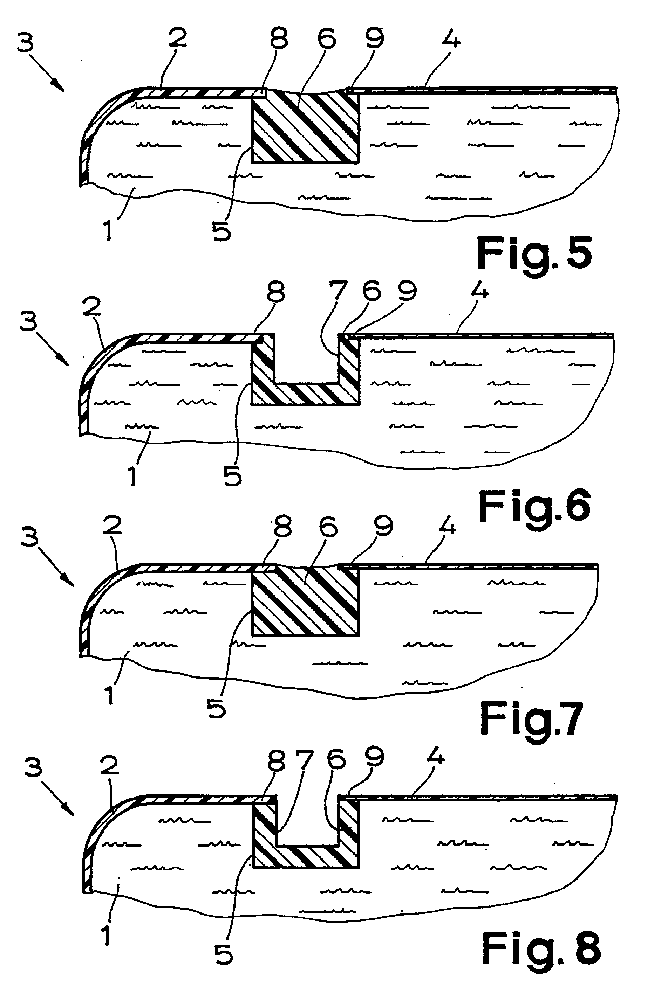

Fig. 5 zeigt nun in vergrößerter Darstellung, daß gemäß dem erfindungsgemäßen Verfahren hier die Deckplatte 2 und die Schutzfolie 4 od. dgl. so aufgeleimt worden sind, daß sie mit ihren Rändern 8, 9 ein wenig in die auf der Unterseite der Kernplatte 1 ausgebildete Nut 5 vorragen. Hier kann es sich um einen Überstand von beispielsweise 0,5 bis 1,5 mm, vorzugsweise von etwa 1,0 mm, handeln. Die genauen Maße hängen von den Einsatzbedingungen und den verwendeten Materialien sowie den Maßen der Verbundplatte insgesamt ab. Zwischen den Rändern 8, 9 ist ein Zutrittsspalt 10 freigelassen. Fig. 5 zeigt die Situation nach einem Verfahrensschritt, in dem ein spritzfähiger Kunststoff in die Nut 5 mindestens bis an die Innenseiten der Deckplatte 2 bzw. der Schutzfolie 4 od. dgl. eingefüllt worden ist. Fig. 5 zeigt dabei die Situation mit Polyurethan als einem bevorzugtem Beispiel spritzfähigen Kunststoffs, der die notwendige Wasserdampffestigkeit und Temperaturbeständigkeit aufweist. Der spritzfähige Kunststoff bildet eine Füllung 6, die in Fig. 5 schon ausgehärtet dargestellt ist. Bei einem im Rahmen des üblichen (5 bis 10 %) liegenden Schwundmaß ergibt sich die in Fig. 5 schematisch dargestellte Kontur der Füllung 6.

Fig. 6 zeigt den Abschluß des erfindungsgemäßen Verfahrens, wobei als letzter Verfahrensschritt nach dem Aushärten des die Füllung 6 der Nut 5 bildenden Kunststoffs in der Füllung 6 die Abtropfnut 7 ausgebildet, im dargestellten und bevorzugten Ausführungsbeispiel ausgefräst wird. Fig. 6 zeigt die durch unmittelbare Verbindung des noch flüssigen Kunststoffs (im Stoffverbund mit der auf den Innenseiten befindlichen Klebeschicht) mit der Deckplatte 2 und der Schutzfolie 4 erzeugte Leimfuge, die im dargestellten Ausführungsbeispiel zur Deckplatte 2 hin etwa 1,8 mm und zur Schutzfolie 4 od. dgl. hin etwa 1,15 mm lang ist. Versuche haben gezeigt, daß diese Konstruktion tatsächlich in der Praxis zu einer sehr langfristigen und hochbelastbaren Wasserdampfdichtigkeit führt.

Die nach dem bislang beschriebenen bevorzugten Beispiel eines erfindungsgemäßen Verfahrens hergestellte Verbundplatte entspricht der bevorzugten Lehre der Erfindung, da die Breite der Abtropfnut 7 hier geringer ist als der lichte Abstand der Ränder 8, 9 der Deckplatte 2 und Schutzfolie 4 od. dgl. voneinander. Außerdem gilt hier, daß die dem Rand 3 zugewandte Kante der Nut 5 um die Differenz der Dicken von Deckplatte 2 und Schutzfolie 4 od. dgl. näher zur Oberseite der Kernplatte 1 liegt als die vom Rand 3 abgewandte Kante der Nut 5.

In der Zeichnung istnicht dargestellt, daß nach bevorzugter Lehre der Erfindung der spritzfähige Kunststoff mindestens bis in die Höhe der Außenseiten der Deckplatte bzw. Schutzfolie od. dgl. in die Nut eingefüllt wird und, wiederum vorzugsweise, beim Ausbilden der Abtropfnut die Außenseite der Füllung flächig beigearbeitet wird. Das ist in dem in den Fig. 5 und 6 dargestellten Ausführungsbeispiel nicht erforderlich.

Bei dem in den Fig. 2 bis 6 dargestellten Verfahren ist der Zutrittsspalt 10 nach insoweit bevorzugter Lehre der Erfindung größer bemessen als die Breite der Abtropfnut 7, so daß die Ränder 8, 9 der Deckplatte 2 bzw. der Schutzfolie 4 od. dgl. beim Ausbilden der Abtropfnut 7 nicht berührt werden. Das ist von besonderer Bedeutung dann, wenn die Schutzfolie 4 od. dgl. wirklich als sehr dünne Kunstharzfolie od. dgl. ausgeführt ist, da so mit Sicherheit ein Einreißen oder Brechen verhindert wird. Eine genaue Angleichung der Breite des Zutrittsspalts 10 an die Breite der Abtropfnut 7 ist aus Toleranzgründen kaum möglich.

Fig. 7 und Fig. 8 zeigen eine Abwandlung des erfindungsgemäßen Verfahrens dahingehend, daß der Zutrittsspalt 10 zwischen den Rändern 8, 9 der Deckplatte 2 bzw. Schutzfolie 4 od. dgl. geringer bemessen wird als die Breite der Abtropfnut 7, so daß die Ränder 8, 9 der Deckplatte 2 bzw. der Schutzfolie 4 od. dgl. beim Ausbilden der Abtropfnut 7 beigearbeitet werden. Der Überstand der Deckplatte 2 bzw. Schutzfolie 4 od. dgl. in der Nut 5 kann hier also größer sein, beispielsweise bei einer insgesamt 9 mm breiten Nut 5 jeweils 2 mm betragen. Dann verbleibt für den Zutrittsspalt 10 eine immer noch ausreichende Breite von 5 mm, durch die der spritzfähige Kunststoff der Füllung 6 in die Nut 5 eingefüllt werden kann. Fig. 8 zeigt dabei, wie die dann breitere Abtropfnut 7 in die Füllung 6 eingebracht, also hier ausgefräst worden ist. Bei dieser Arbeitsweise ergibt sich ein nahtloser senkrechter Übergang zwischen Deckplatte 2 bzw. Schutzfolie 4 od. dgl. und Füllung 6.

Die Zeichnung zeigt, daß nach bevorzugter Lehre der Erfindung während der Herstellung der Verbundplatte die Kernplatte 1 zumindest während des Einfüllens des spritzfähigen Kunststoffs für die Füllung 6 mit der Unterseite im wesentlichen nach oben weisend angeordnet wird. Besonders zweckmäßig ist es, wenn während des gesamten Herstellungsverfahrens die Kernplatte 1 so angeordnet bleibt.

In den Figuren ist nicht dargestellt eine Alternative für das erfindungsgemäße Verfahren, die dadurch gekennzeichnet ist, daß die Deckplatte bzw. die Schutzfolie od. dgl. über die Nut hinweg auf die Unterseite der Kernplatte aufgeleimt wird, daß ein Zutrittsspalt für die Nut in der Deckplatte bzw. der Schutzfolie od. dgl. ausgebildet, insbesondere ausgefräst wird, daß danach der spritzfähige Kunststoff in die Nut mindestens bis an die Innenseiten der Deckplatte bzw. Schutzfolie od. dgl. eingefüllt wird und daß danach in der Füllung die Abtropfnut ausgebildet, insbesondere ausgefräst, wird. Diese Verfahrensweise kann unter bestimmten Bedingungen herstellungstechnische Vorteile haben.

Durch Versuche hat es sich gezeigt, daß die Breite der Abtropfnut 7 zwischen 2 mm und 10 mm, vorzugsweise zwischen 4 mm und 8 mm, insbesondere etwa 6 mm betragen sollte. Ausreichend lange Leimfugen werden dann erreicht, wenn die Breite der Nut 5 zwischen 4 mm und 14 mm, vorzugsweise zwischen 7 mm und 11 mm, insbesondere etwa 9 mm beträgt. Bei einer asymmetrischen Anordnung der Abtropfnut 7 in der Nut 5 können abweichende Werte gewählt werden. Die Tiefe der Nut 5 sollte etwa 4 bis 8mm, vorzugsweise etwa 5,5 mm betragen, die Tiefe der Abtropfnut 7 läge dann bei etwa 2 bis 7, vorzugsweise bei etwa 4 mm.

**Patentansprüche**

1. Verfahren zur Herstellung einer Verbundplatte, wobei die Verbundplatte eine Kernplatte (1), eine auf der Oberseite der Kernplatte aufgeleimte Deckplatte (2), vorzugsweise eine Hochdruck-Schichtstoffplatte (HPL-Platte, DIN 16926), einen auf den Rand (3) der Kernplatte (1) aufgeleimten Randstreifen und eine auf der Unterseite der Kernplatte (1) aufgeleimte Schutzfolie (4) od. dgl. aufweist und, vorzugsweise, die Kernplatte (1) am Rand (3) abgerundet und die Deckplatte (2) zur Bildung des Randstreifens von der Oberseite um den abgerundeten Rand (3) der Kernplatte (1), insbesondere bis auf die Unterseite der Kernplatte (1), herumgezogen ist, bei dem auf der Unterseite der Kernplatte (1) in einem bestimmten Abstand vom Rand (3) eine im wesentlichen parallel zum Rand (3) verlaufende Nut (5) ausgebildet, insbesondere ausgefräst wird, danach die Deckplatte (2) und die Schutzfolie (4) od. dgl. auf die Kernplatte (1) so aufgeleimt werden, daß sie mit ihren Rändern (8, 9) ein wenig in die auf der Unterseite der Kernplatte (1) ausgebildete Nut (5) vorragen, aber einen Zutrittsspalt (10) zwischen den Rändern (8, 9) frei lassen, danach in die Nut (5) eine Füllung (6) aus spritzfähigem Kunststoff mindestens bis an die Innenseiten der Deckplatte (2) bzw. Schutzfolie (4) od. dgl. eingefüllt wird und schließlich in der Füllung (6) nach dem Aushärten des spritzfähigen Kunststoffs eine Abtropfnut (7) ausgebildet, insbesondere ausgefräst, wird.

2. Verfahren zur Herstellung einer Verbundplatte, wobei die Verbundplatte eine Kernplatte (1), eine auf der Oberseite der Kernplatte (1) aufgeleimte Deckplatte (2), vorzugsweise eine Hochdruck-Schichtstoffplatte (HPL-Platte, DIN 16962), einen auf den Rand (3) der Kernplatte (1) aufgeleimten Randstreifen und eine auf der Unterseite der Kernplatte (1) aufgeleimte Schutzfolie (4) od. dgl. aufweist und, vorzugsweise, die Kernplatte (1) am Rand (3) abgerundet und die Deckplatte (2) zur Bildung des Randstreifens von der Oberseite um den abgerundeten Rand (3) der Kernplatte (1), insbesondere bis auf die Unterseite der Kernplatte (1), herumgezogen ist, bei dem auf der Unterseite der Kernplatte (1) in einem bestimmten Abstand vom Rand (3) eine im wesentlichen parallel zum Rand (3) verlaufende Nut (5) ausgebildet, insbesondere ausgefräst wird, danach die Deckplatte (2) und die Schutzfolie (4) od. dgl. auf die Kernplatte (1) und dabei über die Nut (5) hinweg auch auf die Unterseite der Kernplatte (1) aufgeleimt werden,

danach ein Zutrittsspalt (10) für die Nut (5) in der Deckplatte (2) bzw. der Schutzfolie (4) od. dgl. ausgebildet, insbesondere ausgefräst wird,

danach in die Nut (5) eine Füllung (6) aus spritzfähigem Kunststoff mindestens bis an die Innenseiten der Deckplatte (2) bzw. der Schutzfolie (4) od. dgl. eingefüllt wird und

schließlich in der Füllung (6) nach dem Aushärten des spritzfähigen Kunststoffs eine Abtropfnut (7) ausgebildet, insbesondere ausgefräst, wird.

3. Verfahren nach Anspruch 1 oder 2, dadurch gekennzeichnet, daß der spritzfähige Kunststoff mindestens bis in die Höhe der Außenseiten der Deckplatte (2) bzw. der Schutzfolie (4) od. dgl. in die Nut (5) eingefüllt wird.

4. Verfahren nach Anspruch 3, dadurch gekennzeichnet, daß beim Ausbilden der Abtropfnut (7) die Außenseite der Füllung (6) flächig beigearbeitet wird.

5. Verfahren nach einem der Ansprüche 1 bis 4, dadurch gekennzeichnet, daß der Zutrittsspalt (10) zwischen den Rändern (8, 9) der Deckplatte (2) bzw. Schutzfolie (4) od. dgl. größer bemessen wird als die Breite der Abtropfnut (7), so daß die Ränder (8, 9) der Deckplatte (2) bzw. der Schutzfolie (4) od. dgl. insbesondere der Rand (9) der Schutzfolie (4) od. dgl. beim Ausbilden der Abtropfnut (7) nicht berührt werden bzw. berührt wird.

6. Verfahren nach einem der Ansprüche 1 bis 3, dadurch gekennzeichnet, daß der Zutrittsspalt (10) zwischen den Rändern (8, 9) der Deckplatte (2) bzw. Schutzfolie (4) od. dgl. geringer bemessen wird als die Breite der Abtropfnut (7), so daß die Ränder (8, 9) der Deckplatte (2) bzw. der Schutzfolie (4) od. dgl. beim Ausbilden der Abtropfnut (7) beigearbeitet werden.

7. Verfahren nach einem der Ansprüche 1 bis 6, zur Herstellung einer Verbundplatte, bei der die Deckplatte (2) um den abgerundeten Rand (3) der Kernplatte (1) bis auf die Unterseite der Kernplatte (1) in die Nut (5) hinein herumgezogen ist und die Deckplatte (2) dicker ist als die Schutzfolie (4) od. dgl., dadurch gekennzeichnet, daß die Kernplatte (1) beim Abrunden des Randes (3) oder in einem darauffolgenden Verfahrensschritt durch Abtragen von der Unterseite aus zwischen dem Rand (3) und der dem Rand (3) zugewandten Kante der Nut (5) auf eine Dicke gebracht wird, die um die Differenz der Dicken von Deckplatte (2) und Schutzfolie (4) od. dgl. geringer ist als die Dicke der Kernplatte (1) im übrigen.

## Claims

1. A process for the manufacture of a composite panel,

in which the composite panel comprises a core panel (1), a cover panel (2), preferably a high pressure laminated panel (HPL-panel, DIN 16926), glued on to the upper surface of the core panel, an edge strip glued on to the edge (3) of the core panel (1), and a protective sheet (4) or the like glued on to the lower surface of the core panel (1) and, preferably, the core panel (1) is rounded off at edge (3) and the cover panel (2) is drawn around the rounded-off edge (3) of core panel (1) particularly as far as the lower surface of core panel (1), to form the edge strip,

in which a slot (5) extending approximately parallel to edge (3) is formed, and in particular is milled out, on the lower surface of core panel (1) at a definite distance from edge (3),

subsequently the cover panel (2) and the protective sheet (4) or the like are so glued on to the core panel (1) that their edges (8, 9) project a little into the slot (5) formed on the lower surface of core panel (1) but leave an access gap (10) open between the edges (8, 9),

after which a filling (6) of sprayable synthetic material is fed into the slot (5) at least as far as the inner surfaces of the cover panel (2) and/or the protective sheet (4) or the like,

and finally, after hardening of the sprayable synthetic material, a drip slot (7) is formed, and in particular is milled out, in the filling (6).

2. A process for the manufacture of a composite panel,

in which the composite panel comprises a core panel (1), a cover panel (2), preferably a high pressure laminated panel (HPL-panel, DIN 16926), glued on to the upper surface of the core panel (1), an edge strip glued on to the edge (3) of the core panel (1), and a protective sheet (4) or the like glued on to the lower surface of the core panel (1) and, preferably, the core panel (1) is rounded off at edge (3) and the cover panel (1) particularly as far as the lower surface of core panel (1), to form the edge strip,

in which a slot (5) extending approximately parallel to edge (3) is formed, and in particular is milled out, on the lower surface of core panel (1) at a definite distance from edge (3),

subsequently the cover panel (2) and the protective sheet (4) or the like are glued on to the core panel (1) and in doing so are glued across the slot (5) on to the lower surface of the core panel (1),

after which an access gap (10) for the slot (5) is formed, in particular is milled out, in the cover panel (2) and/or in the protective sheet (4) or the like,

after which a filling (6) of sprayable synthetic material is fed into the slot (5) at least as far as the inner surfaces of the cover panel (2) and/or the protective sheet (4) or the like,

and finally, after hardening of the sprayable synthetic material, a drip slot (7) is formed, and in particular is milled out, in the filling (6).

3. A process according to Claim 1 or 2, characterized in that the sprayable synthetic material is fed into the slot (5) at least up to the level of the outer surfaces of the cover panel (2) and/or of the protective sheet (4) or the like.

4. A process according to Claim 3, characterized in that when forming the drip slot (7) the outside of the filling (6) is machined flat.

5. A process according to one of Claims 1 to 4, characterized in that the access gap (10) between the edges (8, 9) of the cover panel (2) and/or protective sheet (4) or the like has a larger dimension than the width of the drip slot (7), so that the edges (8, 9) of the cover panel (2) and/or the protective sheet (4) or the like, particularly the edge (9) of the protective sheet (4) or the like are/is not contacted when forming the drip slot (7).

6. A process according to one of Claims 1 to 3, characterized in that the access gap (10) between the edges (8, 9) of the cover panel (2) and/or protective sheet (4) or the like has a smaller dimension than the width of the drip slot (7), so that the edges (8, 9) of the cover panel (2) and/or the proctective sheet (4) or the like are machined during the formation of the drip slot (7).

7. A process according to one of Claims 1 to 6 for the manufacture of a composite panel, in which the cover panel (2) is drawn around the rounded-off edge (3) of the core panel (1) as far as into the slot (5) on the lower surface of the core panel (1), and the cover panel (2) is thicker than the protective sheet (4) or the like, characterized in that the core panel (1) by removing material from its lower surface between the edge (3) and the rim of slot (5) facing edge (3) during the rounding-off of the edge (3) or in a subsequent stage of manufacture is brought to a thickness that is less than the thickness of the rest of the core panel (1) by the difference between the thicknesses of the cover panel (2) and the protective sheet (4) or the like.

## Revendications

1. Procédé pour la préparation d'un panneau mixte,
ce panneau mixte présentant un panneau central (1), un panneau de recouvrement 2 collé sur la face supérieure du panneau central, de préférence, un panneau stratifié haute pression (panneau HPL = High Pressure Laminate, norme DIN 16926), une bande marginale collée sur le bord (3) du panneau central (1), ainsi qu'une feuille mince de protection 4 ou analogues collée sur la face inférieure du panneau central (1) ; de préférence, le panneau central (1) est arrondi au bord (3) et on étend le panneau de recouvrement (2), à partir de la face supérieure du panneau central (1) et autour de son bord arrondi (3), en particulier, jusqu'à la face inférieure du panneau central (1), afin de réaliser la bande marginale,
procédé par lequel on façonne, en particulier, on fraise une rainure (5) s'étendant pratiquement parallèlement au bord (3), sur la face inférieure du panneau central (1), à une distance déterminée du bord (3),
ensuite, on colle le panneau de recouvrement (2) et la feuille mince de protection (4) ou analogues, sur le panneau central (1), de telle sorte qu'elles fassent légèrement saillie avec leurs bords (8, 9), dans la rainure (5) façonnée sur la face inférieure du panneau central (1), tout en laissant cependant libre un interstice d'accès (10) ménagé entre les bords (8, 9),
on introduit ensuite une matière de remplissage (6) dans la rainure (5), cette matière de remplissage étant constituée d'une matière synthétique injectable, au moins jusque contre les faces internes du panneau de recouvrement (2) ou de la feuille mince de protection (4) ou analogues et
enfin, dans la matière de remplissage (6), après durcissement de la matière synthétique injectable, on façonne, en particulier, on fraise une rainure d'égouttage (7).

2. Procédé pour la préparation d'un panneau mixte,
le panneau mixte présentant un panneau central (1), un panneau de recouvrement (2) collé sur la face supérieure du panneau central, de préférence, un panneau stratifié haute pression (panneau HPL = High Pressure Laminate, norme DIN 16926), une bande marginale collée sur le bord (3) du panneau central (1), ainsi qu'une feuille mince de protection (4) ou analogues collée sur la face inférieure du panneau central (1) ; de préférence, le panneau central (1) est arrondi au bord (3) et on étend le panneau de recouvrement (2), à partir de la face supérieure du panneau central (1) et autour de son bord arrondi (3), en particulier, jusqu'à la face inférieure du panneau central (1), afin de réaliser la bande marginale,
procédé par lequel on façonne, en particulier, on fraise une rainure (5) s'étendant pratiquement parallèlement au bord (3), sur la face inférieure du panneau central (1), à une distance déterminée du bord (3),
on colle ensuite le panneau de recouvrement (2) et la feuille mince de protection (4) ou analogues sur le panneau central (1) et, en l'occurrence, au-delà de la rainure (5), également sur la face inférieure du panneau central (1),
ensuite, on façonne, en particulier, on fraise, un interstice d'accès (10), pour la rainure (5), dans le panneau de recouvrement (2) ou la feuille mince de protection (4) ou analogues,
ensuite, on introduit une matière de remplissage (6) dans la rainure (5), cette matière de remplissage étant constituée d'une matière synthétique injectable, au moins jusque contre les faces internes du panneau de recouvrement (2) ou de la feuille mince de protection (4) ou analogues et
enfin, dans la matière de remplissage (6), après durcissement de la matière synthétique injectable, on façonne, en particulier, on fraise une rainure d'égouttage (7).

3. Procédé selon la revendication 1 ou 2, caractérisé en ce qu'on introduit, dans la rainure (5), la matière synthétique injectable, au moins jusqu'à la hauteur des faces externes du panneau de recouvrement (2) ou de la feuille mince de protection (4) ou analogues.

4. Procédé selon la revendication 3, caractérisé en ce que, lors de la réalisation de la rainure d'égouttage (7), on façonne simultanément la face externe de la matière de remplissage (6), en nappe.

5. Procédé selon l'une quelconque des revendications 1 à 4, caractérisé en ce que la dimension de l'interstice d'accès (10), ménagé entre les bords (8, 9) du panneau de recouvrement (2) ou de la feuille mince de protection (4) ou analogues, est supérieure à la largeur de la rainure d'égouttage (7), de telle sorte que, lors de la réalisation de la rainure d'égouttage (7), on ne touche pas les bords (8, 9) du panneau de recouvrement (2) ou de la feuille mince de protection (4) ou analogues, en particulier le bord (9) de la feuille mince de protection (4) ou analogues.

6. Procédé selon l'une quelconque des revendications 1 à 3, caractérisé en ce que la dimension de l'interstice d'accès (10), ménagé entre les bords (8, 9) du panneau de recouvrement (2) ou de la feuille mince de protection (4) ou analogues, est inférieure à la largeur de la rainure d'égouttage (7), de telle sorte que, lors de la réalisation de la rainure d'égouttage (7), on façonne simultanément les bords (8, 9) du panneau de recouvrement (2) ou de la feuille mince de protection (4) ou analogues.

7. Procédé selon l'une quelconque des revendications 1 à 6, destiné à la préparation d'un panneau mixte, par lequel on étend le panneau de recouvrement (2) par-dessus le bord arrondi (3) du panneau central (1), jusqu'à la face inférieure du panneau central (1), au sein de la rainure (5), le panneau de recouvrement (2) étant plus épais que la feuille mince de protection (4) ou analogues, caractérisé en ce que, lorsqu'on arrondit le bord (3) ou au cours d'une étape opératoire suivante, en procédant à un évidement à partir de la face inférieure, entre le bord (3) et l'arête de la rainure (5) tournée vers le bord (3), on amène le panneau central (1) à une épaisseur inférieure à l'épaisseur du reste du panneau central (1), selon une dimension qui correspond à la différence des épaisseurs du panneau de recouvrement (2) et de la feuille mince de protection (4) ou analogues.

Fig.1

Fig.2

Fig.3

Fig.4

**Fig. 5**

**Fig.6**

**Fig.7**

**Fig. 8**